# EUROPÄISCHE PATENTANMELDUNG

(11) **EP 1 297 940 A1**
(43) Veröffentlichungstag der Anmeldung: **02.04.2003**
(21) Anmeldenummer: 02021154.6
(22) Anmeldetag: 24.09.2002
(51) Int. Cl.: B29C 45/42

(54) **Verfahren und Vorrichtung zur Formung und Handhabung von Werkstücken**

(30) Priorität: 26.09.2001 DE 10147554
(71) Anmelder: Luckow, Ursula, 24558 Henstedt-Rhen (DE)
(72) Erfinder: Luckow, Ursula, 24558 Henstedt-Rhen (DE)
(74) Vertreter: Klickow, Hans-Henning

(57) **Zusammenfassung**

Das Verfahren und die Vorrichtung dienen zur Formung und Handhabung von Werkstücken (21). Bei der Durchführung des Formungsvorganges wird ein fließfähiges und nach seiner Formung verfestigbares Material mindestens einem Werkzeug (8) und mindestens einer Form zur Konturvorgabe für die Werkstücke (21) zugeleitet. Die Werkstücke (21) werden nach einer ausreichenden Verfestigung von einer Handhabungseinrichtung (23) aus dem geöffneten Werkzeug (8) entnommen. Mindestens ein Tragarm (22) der Handhabungseinrichtung (23) mit mindestens einem Halteelement (24) für das Werkstück (21) wird mindestens während eines Teiles eines zu durchlaufenden Positionierweges innerhalb des geschlossenen Werkzeuges (8) bewegt.

## Beschreibung

Die Erfindung betrifft ein Verfahren zur Formung und Handhabung von Werkstücken, bei dem ein fließfähiges und nach seiner Formung verfestigbares Material mindestens einem Werkzeug mit mindestens einer Form zur Konturvorgabe für die Werkstücke zugeleitet wird und bei dem die Werkstücke nach einer ausreichenden Verfestigung von einer Handhabungseinrichtung aus dem geöffneten Werkzeug entnommen werden.

Die Erfindung betrifft darüber hinaus eine Vorrichtung zur Formung und Handhabung von Werkstücken, die mindestens ein Werkzeug mit einer Form für ein fließfähiges und nach seiner Formung verfestigbares Material aufweist und die mit einer Handhabungseinrichtung für die Werkstücke versehen ist, die mindestens einen Tragarm sowie mindestens ein Halteelement zur Beaufschlagung der Werkstücke aufweist.

Derartige Verfahren und Vorrichtungen werden beispielsweise eingesetzt, um spritzgußtechnisch Werkstücke aus thermoplastischen Kunststoffen zu produzieren. Die Werkstücke können beispielsweise als Verpackungen für Compact Disc oder DV-Disc realisiert sein.

Ein üblicher Formungsvorgang läuft derart ab, daß zunächst das geeignet temperierte fließfähige Material in die geschlossene Form des Werkzeuges eingespritzt wird und daß das Werkzeug nach einer ausreichenden Verfestigung des Materials des Werkstückes öffnet. Nach der Durchführung der Öffnungsbewegung fährt die Handhabungseinrichtung mit einem Tragarm zwischen die geöffneten Werkzeughälften und ergreift mit einem oder mehreren Halteelementen das Werkstück. Nach einem Herausfahren der Handhabungseinrichtung aus dem Bereich des Werkzeuges schließt das Werkzeug erneut und der Vorgang wiederholt sich.

Aufgrund des hohen Preises der eingesetzten Vorrichtungen können die bisherigen Verfahren und Vorrichtungen noch nicht alle Anforderungen erfüllen, die an eine optimale zeitliche Ausnutzung der Produktionskapazität gestellt werden.

Aufgabe der vorliegenden Erfindung ist es daher, ein Verfahren der einleitend genannten Art derart zu verbessern, daß je Zeiteinheit eine vergrößerte Anzahl von Werkstücken erzeugt werden kann.

Diese Aufgabe wird erfindungsgemäß dadurch gelöst, daß mindestens ein Tragarm der Handhabungseinrichtung mit mindestens einem Halteelement für das Werkstück mindestens während eines Teiles eines zu durchlaufenden Positionierweges innerhalb des geschlossenen Werkzeuges bewegt wird.

Weitere Aufgabe der vorliegenden Erfindung ist es, eine Vorrichtung der einleitend genannten Art derart zu konstruieren, daß eine Verkürzung der Zykluszeit bei der Herstellung der Werkstücke unterstützt wird.

Diese Aufgabe wird erfindungsgemäß dadurch gelöst, daß das Werkzeug mindestens einen Positionierraum für den Tragarm der Handhabungseinrichtung aufweist, der bei geschlossenem Werkzeug als eine Führungsbahn für den Tragarm ausgebildet ist.

Durch das Verfahren und die Vorrichtung ist es möglich, die Zykluszeit dadurch deutlich zu verkürzen, daß nicht mit dem Einfahren der Handhabungseinrichtung in das Werkzeug gewartet werden muß, bis sich das Werkzeug zumindest bereits zu einem Teil geöffnet hat. Es ist vielmehr möglich, unmittelbar nach einer Entfernung der Handhabungseinrichtung mit dem oder mit den gespritzten Werkstücken aus dem Werkzeug die Schließbewegung des Werkzeuges durchzuführen und unmittelbar mit der Formung von neuen Werkstücken zu beginnen.

Während der Durchführung des Formungsvorganges bzw. während einer erforderlichen Abkühlungs- oder Verfestigungszeit der Werkstücke fährt die Handhabungseinrichtung mit dem Halteelement in das geschlossene Werkzeug ein und kann mit den Halteelementen unmittelbar neben den zu entnehmenden Werkstücken positioniert werden. Mit einem beginnenden Öffnungsvorgang des Werkzeuges braucht dann lediglich noch ein unmittelbarer Kontakt zwischen den Halteelementen und den Werkstücken hergestellt werden und der Entnahmevorgang kann beginnen. Die Zykluszeit kann somit um die Zeitspanne verkürzt werden, die gemäß dem Stand der Technik für ein Einfahren der Handhabungsvorrichtung in das geöffnete Werkzeug erforderlich wäre.

Ein sehr kurzfristiger Zugriff der Haltelemente auf das Werkstück wird dadurch unterstützt, daß das Halteelement in einem geschlossenen Zustand des Werkzeuges neben der Form positioniert wird.

Ebenfalls trägt es zur Verkürzung des Prozeßzyklus bei, daß die Handhabungseinrichtung nach einem Schließen des Werkzeuges in das Werkzeug einfährt.

Gemäß einer weiteren Verfahrensvariante ist vorgesehen, daß die Einfahrbewegung der Handhabungseinrichtung in das Werkzeug mindestens zeitweilig zeitlich überlagert mit der Schließbewegung des Werkzeuges durchgeführt wird.

Eine einfache mechanische Steuerbarkeit sowie eine geringe Zugriffszeit wird auch dadurch unterstützt, daß das Halteelement aus einer Ruhestellung in eine Arbeitsstellung zur Beaufschlagung des Werkstückes verschwenkt wird.

Zur Ermöglichung einer Entnahme der Werkstücke aus den Werkzeugen ist vorgesehen, daß die Handhabungseinrichtung bei geöffnetem Werkzeug aus dem Werkzeug herausfahrbar ist.

Zur Ermöglichung eines unmittelbaren Schließens der Werkzeuge nach einem Herausfahren der Handhabungseinrichtung ist vorgesehen, daß die Handhabungseinrichtung bei geschlossenem Werkzeug in das Werkzeug einfahrbar ist.

Eine Möglichkeit zur Bereitstellung des Bewegungsraumes für die Handhabungseinrichtung besteht darin, daß die Handhabungseinrichtung in einer Vertiefung eines Werkzeugblockes des Werkzeuges positionierbar ist.

Ebenfalls ist es möglich, daß die Handhabungseinrichtung in einem Freiraum zwischen Werkzeugblöcken des Werkzeuges mit aus dem Werkzeugblöcken vorstehenden Formteilen positionierbar ist.

Zur Vorgabe definierter Bewegungsbahnen ist es möglich, daß der Tragarm relativ zum Werkzeug entlang von Führungen verschieblich ist.

Eine besonders schnelle und mechanisch einfach zu realisierende Positioniermöglichkeit für die Halteelemente wird dadurch bereitgestellt, daß mindestens ein Halteelement relativ zum Tragarm verschwenkbar angeordnet ist.

Eine verbesserte Halterung der Werkstücke kann dadurch erreicht werden, daß je Werkstück mindestens zwei Halteelemente vorgesehen sind.

Eine sehr sichere Handhabung der Werkstücke wird insbesondere dadurch unterstützt, daß je Werkstück mindestens vier Halteelemente vorgesehen sind.

Eine günstige Anordnung des Schwerpunktes des Werkstückes relativ zu den Halteelementen wird dadurch vorgegeben, daß die Halteelemente in der Beaufschlagungspositionierung eine Rechteckkontur aufspannen.

Eine schonende Beaufschlagung des Werkstückes kann dadurch erfolgen, daß mindestens eines der Halteelemente einen Sauger zur Unterdruckbeaufschlagung aufweist.

Eine andere Halterungsvariante besteht darin, daß mindestens eines der Halteelemente als ein bei Überdruckeinwirkung wölbungsfähiges Element ausgebildet ist.

Weiterhin kann auch vorgesehen werden, daß mindestens eines der Halterungselemente als ein mechanisches Klemmelement ausgebildet ist.

Eine Halterung durch einen einfachen Aufschiebevorgang kann dadurch durchgeführt werden, daß mindestens eines der Halteelemente als eine sich verjüngende Begrenzungskontur ausgebildet ist.

Eine bevorzugte Anwendung besteht darin, daß das Werkzeug im Bereich einer Spritzgußmaschine angeordnet ist.

Insbesondere ist daran gedacht, daß die Spritzgußmaschine als ein Etagenwerkzeug ausgebildet ist.

Ebenfalls ist es möglich, daß das Werkzeug im Bereich einer Spritz-Presse angeordnet ist.

Ein weiteres Anwendungsgebiet besteht darin, daß das Werkzeug im Bereich einer Aluminium-Spritzgußmaschine angeordnet ist.

Schließlich ist auch daran gedacht, daß das Werkzeug im Bereich einer Gummi-Spritzgußmaschine angeordnet ist.

Eine abgewandelte Ausführungsform besteht darin, daß die Spritzgußmaschine als ein Etagenwerkzeug mit beweglichem Mittelbalken ausgebildet ist.

Zur Vermeidung eines Entlanggleitens der Halterungselemente an einer Oberfläche der Werkstücke wird vorgeschlagen, daß mindestens eines der Halteelemente eine Lagerung zum Ausgleich von Bewegungen des Werkstückes aufgrund einer Hubbewegung von Ausstoßern des Werkzeuges aufweist.

Eine hohe Handhabungssicherheit wird auch dadurch unterstützt, daß die Halteelemente das Werkstück im Bereich eines Randes des Werkstückes beaufschlagen.

Eine mechanisch sehr kompakte Ausführungsform wird dadurch erreicht, daß mindestens eines der Halteelemente von einer Hülse mit Innenelement geführt ist.

Eine kinematisch einfache Bewegungskopplung wird dadurch erreicht, daß die Handhabungseinrichtung zur Übergabe der Werkstücke an eine stehende Übergabestation ausgebildet ist.

Eine zeitliche Verkürzung des Übergabevorganges kann dadurch erreicht werden, daß die Handhabungseinrichtung zur Übergabe der Werkstücke an eine bewegte Übergabestation ausgebildet ist.

Eine weitere Verkürzung der Nebenzeiten wird dadurch erreicht, daß die Handhabungseinrichtung einen Antrieb zur Durchführung einer sich zeitlich mit einer Öffnungsbewegung des Werkzeuges überlagernden Positionierbewegung der Halteelemente ausgerüstet ist.

Bei einer zeitlich kurzen Durchführung des Übergabevorganges ist es möglich, daß die Handhabungseinrichtung einen Antrieb zur Durchführung einer sich zeitlich mit einer Schließbewegung des Werkzeuges überlagernden Positionierbewegung der Halteelemente ausgerüstet ist.

In den Zeichnungen sind Ausführungsbeispiele der Erfindung schematisch dargestellt. Es zeigen:
- Fig. 1: eine vereinfachte Querschnittdarstellung durch ein Etagenwerkzeug, das mit Formeinsätzen versehen ist,
- Fig. 2: eine schematische Darstellung eines Spritzgußwerkzeuges mit beweglichem Mittelbalken während der Durchführung einer Öffnungsbewegung und vor einem Kontakt der Handhabungseinrichtung mit dem gespritzten Werkstück,
- Fig. 3: eine vergrößerte Darstellung der Einzelheit III in Fig. 2 nach einem Kontakt der Handhabungseinrichtung mit dem Werkstück,
- Fig. 4: die Vorrichtung gemäß Fig. 2 bei dem Herausfahren der Handhabungseinrichtung aus dem geöffneten Werkzeug,
- Fig. 5: eine vergrößerte Detaildarstellung gemäß Blickrichtung V in Fig. 3,
- Fig. 6: die Vorrichtung gemäß Fig. 2 und Fig. 4 nach einem Herausfahren der Handhabungseinrichtung aus dem geöffneten Werkzeug und bei Beginn der Schließbewegung des Werkzeuges und
- Fig. 7: die Vorrichtung gemäß Fig. 6 nach einer Beendigung der Schließbewegung des Werkzeuges und unmittelbar vor einem Einfahren der Handhabungseinrichtung in das geschlossene Werkzeug.

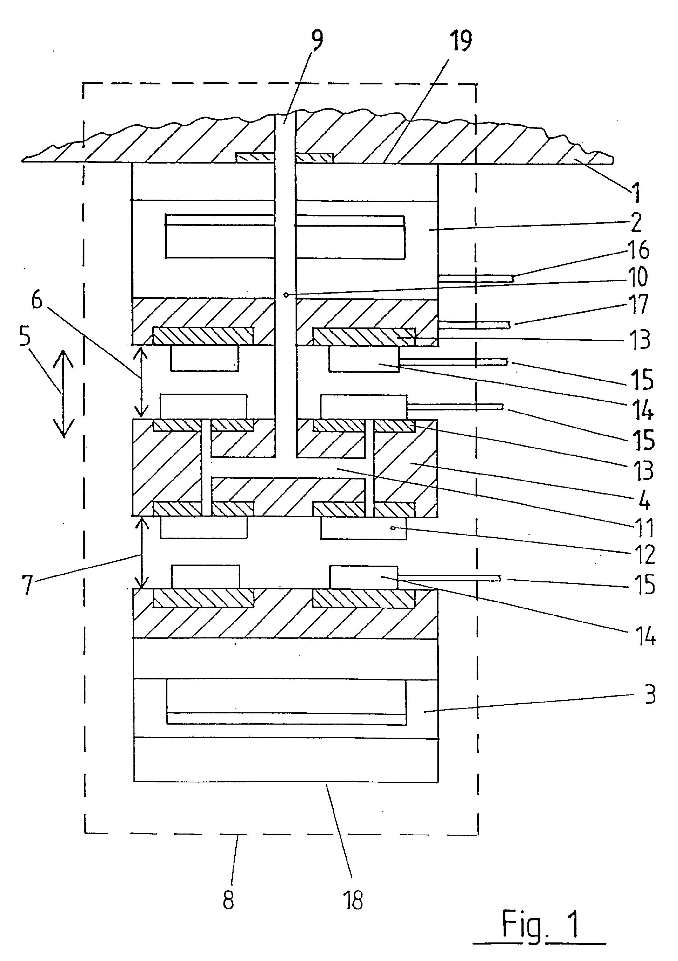

Die in Fig. 1 als Ausführungsbeispiel dargestellte Vorrichtung zum Spritzgießen ist als ein Etagenwerkzeug ausgebildet, bei dem im Bereich eines Trägers (1) ein stationärer Werkzeugblock (2) angeordnet ist. Zwischen dem stationären Werkzeugblock (2) und einem beweglichen Werkzeugblock (3) ist ein Mittelbalken (4) angeordnet. Der bewegliche Werkzeugblock (3) und der Mittelbalken (4) sind bezüglich ihres Bewegungsbereiches mechanisch derart verkoppelt, daß bei einer Entfernung des beweglichen Werkzeugblockes (3) vom stationären Werkzeugblock (2) in Bewegungsrichtung (5) der bewegliche Werkzeugblock (3) den doppelten Weg durchläuft, den der Mittelbalken (4) zurücklegt. Dies führt dazu, daß bei einer Öffnungsbewegung Abstände (6, 7) zwischen dem stationären Werkzeugblock (2) und dem Mittelbalken (4) einerseits und dem beweglichen Werkzeugblock (3) und dem Mittelbalken (4) andererseits im wesentlichen gleich dimensioniert sind. Die Bewegungskoordinierung kann beispielsweise über Spindeln oder über Zahnräder erfolgen.

Vom stationären Werkzeugblock (2), dem beweglichen Werkzeugblock (3) und dem Mittelbalken (4) wird ein Werkzeug (8) ausgebildet. In den Bereich des Werkzeuges (8) ist ein Schnorchel (9) mit einem Heizkanal (10) verlegt, der sich durch den stationären Werkzeugblock (2) hindurch erstreckt und and den Mittelbalken (4) angekoppelt ist. Im Bereich des Mittelbalkens (4) mündet der Heizkanal (10) in Verteilkanäle (11) ein, die im Bereich von Formnestern (12) enden.

Bei der Ausführungsform gemäß Fig. 1 sind im Bereich jeder einem der Werkzeugblöcke (2, 3) zugewandter Seiten des Mittelbalkens (4) zwei Formnester (12) angeordnet. In Abhängigkeit von der jeweils vorgesehenen Größe der Werkstücke sowie der Spritzgußeinrichtung kann die Anzahl der Formnester (12) beliebig variiert werden. Zwischen den Formnestern (12) und dem Mittelbalken (4) können thermische Isolatoren (13) angeordnet werden. Die thermischen Isolatoren (13) können beispielsweise aus Keramik ausgebildet sein. Es ist aber auch möglich, andere druckfeste Wärmedämmungen zu verwenden.

Im Bereich der dem Mittelbalken (4) zugewandten Begrenzungsflächen der Werkzeugblöcke (2, 3) sind korrespondierend zu den Formnestern (12) Einsätze (14) angeordnet, die bei einer Kombination mit den Formnestern (12) bei einem aneinander anliegen der Werkzeugblöcke (2, 3) und des Mittelbalkens (4) die mit dem thermoplastischen Material auszufüllenden Konturräume aufspannen. Zwischen den Einsätzen (14) und den Werkzeugblöcken (2, 3) können ebenfalls thermische Isolatoren (13) angeordnet werden. Die Formnester (12) und die Einsätze (14) bilden Formeinsätze für die Werkzeugblöcke (2, 3) aus.

Zur Temperierung der Formnester (12) sind Einsatzkanäle vorgesehen, die an Temperiermedienzuleitungen (15) angeschlossen sind. Bei der Ausführungsform gemäß Fig. 1 sind ebenfalls im Bereich der Einsätze (14) Temperiermedienzuleitungen (15) angeordnet. Die Zuleitungen (15) können entweder direkt in den Bereich der Formnester (12) und der Einsätze (14) verlegt sein, es ist aber auch möglich, eine Fixierung der Zuleitungen (15) im Bereich der Werkzeugblöcke (2, 3) und des Mittelbalkens (4) vorzunehmen.

Zur Kühlung des Werkzeuges (8) können im Bereich des Werkzeugblockes (2) ebenfalls Kühlmittelzuleitungen (16, 17) angeordnet werden. Eine der Kühlmittelzuleitungen (16) dient zur Zuleitung des Kühlmittels, die andere Kühlmitteleitung (17) dient zur Kühlmittelabfuhr. Eine vergleichbare Ausstattung kann auch im Bereich des beweglichen Werkzeugblockes (3) realisiert werden.

Durch die vorstehend erläuterte Temperierung kann das Werkzeug (8) sowohl im Bereich einer Auswerferseite (18) als auch im Bereich einer dem Träger (1) zugewandten Düsenseite (19) geeignet temperiert werden.

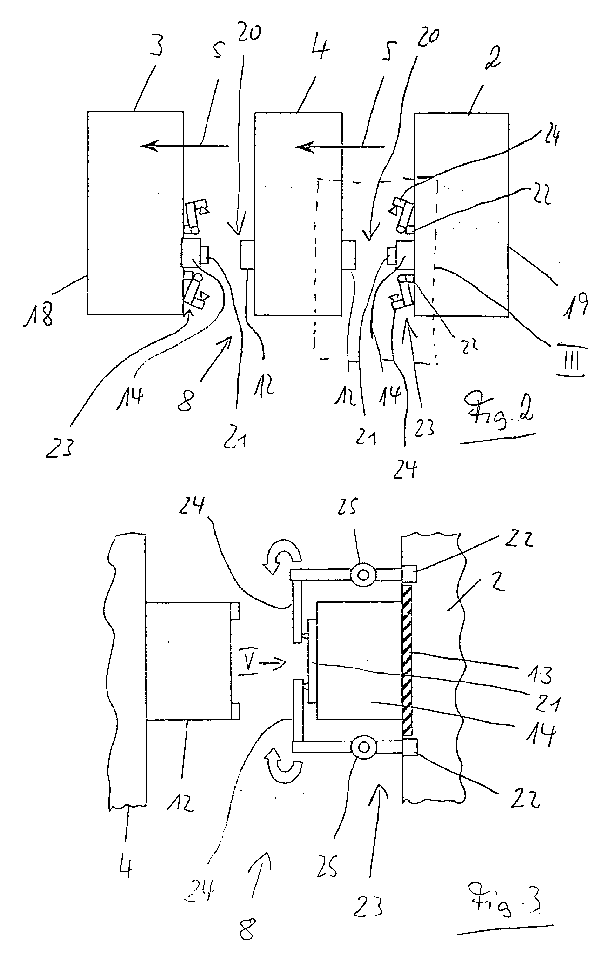

Fig. 2 zeigt die Vorrichtung gemäß Fig. 1 in einer schematischen Darstellung und in einer um 90° gedrehten räumlichen Anordnung. Im Bereich der jeweils aus einem Formnest (12) und einem Einsatz (14) ausgebildeten Form (20) ist ein Werkstück (21) zu erkennen. In einer Umgebung des Werkstückes (21) sind Tragarme (22) einer Handhabungseinrichtung (23) angeordnet. Die Tragarme (22) haltern zur Beaufschlagung der Werkstücke (21) vorgesehene Halteelemente (24).

In der vergrößerten Detaildarstellung in Fig. 3 sind die Halteelemente (24) in einem Kontaktzustand mit dem Werkstück (21) abgebildet. Bei der erläuterten Ausführungsform sind die Halteelemente (24) über Schwenkgelenke (25) mit den Tragarmen (22) verbunden und weisen winkelige Distanzstreben (26) auf, die im Bereich ihrer dem Werkstück (21) zuwendbaren Enden mit Saugern (27) versehen sind. Hierdurch ist es in einfacher Weise möglich, die Halteelemente (24) aus der in Fig. 2 dargestellten Ruhepositionierung in die in Fig. 3 dargestellte Zugriffpositionierung zu verschwenken und den Kontakt mit dem Werkstück (21) herzustellen.

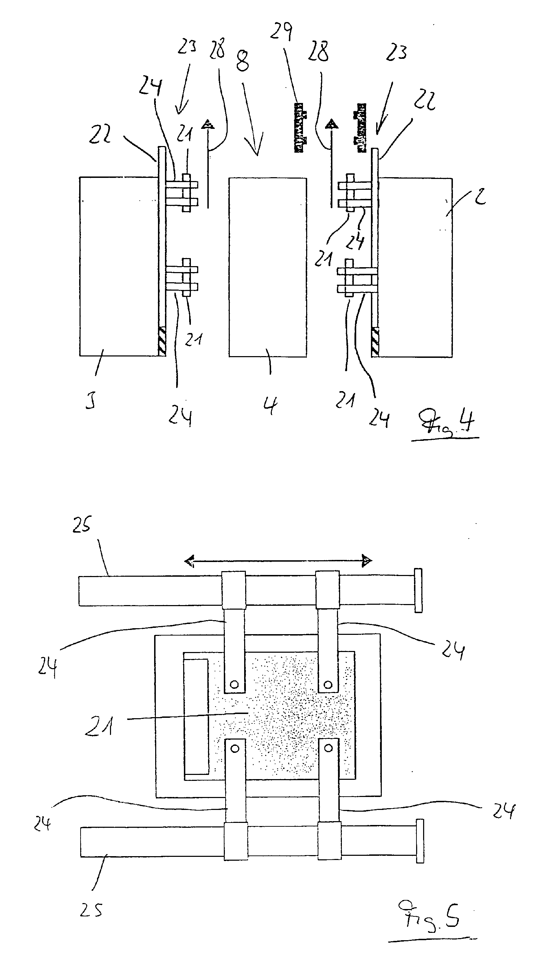

Fig. 4 zeigt das Werkzeug (8) in einer geöffneten Positionierung und mit teilweise aus dem Bereich des Werkzeuges (8) bereits herausgefahrener Handhabungseinrichtung (23). Die Halteelemente (24) befinden sich in Kontakt mit den Werkstücken (21) und die Bewegung der Handhabungseinrichtung (23) erfolgt in einer Ausfahrrichtung (28). Außerhalb des Werkzeuges (8) wartet bereits eine Übergabestation (29), um nach einer Vollendung der Ausfahrbewegung der Tragarme (22) die Werkstücke (21) zu übernehmen.

Fig. 5 zeigt eine vergrößerte Draufsicht auf das von den Halteelementen (24) beaufschlagte Werkstück (21) gemäß Blickrichtung V in Fig. 3. Bei dieser Ausführungsform wird das Werkstück (21) von vier Halteelementen (24) beaufschlagt, um eine zuverlässige Handhabung zu unterstützen. Es ist aber auch möglich, eine kleinere oder eine größere Anzahl von Halteelementen zu verwenden. Ebenfalls können statt der beispielhaft dargestellten Saugeinrichtung auch andersartige Halteelemente eingesetzt werden. Insbesondere ist beispielsweise an eine mechanische Klemmung gedacht.

Bei der dargestellten Ausführungsform sind die Schwenkgelenke (25) aus teleskopartig ineinander geführten Rohren ausgebildet. Auch hier sind aber eine Vielzahl anderer Ausführungsformen denkbar. Ebenfalls ist es beispielsweise auch denkbar, die Schwenkgelenke (25) in die Tragarme (22) zu integrieren und hierdurch in einfacher Weise eine mechanische Vorgabe der Schwenkbewegungen durchführen zu können.

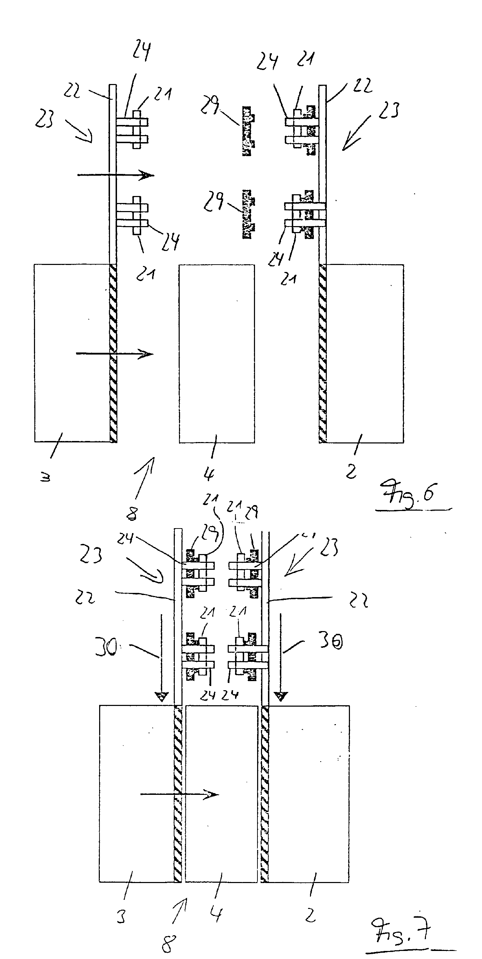

Fig. 6 zeigt die Anordnung gemäß Fig. 4 nach einem Abschluß der Ausfahrbewegung der Handhabungseinrichtung (23) und während der Übergabe der Werkstücke (21) an die Übergabestation (29). Unmittelbar im Anschluß an das Herausfahren der Handhabungseinrichtung (23) mit den Werkstücken (21) aus dem Bereich des Werkzeuges (8) beginnt bereits wieder der Schließvorgang des Werkzeuges (8).

Gemäß dem in Fig. 7 dargestellten Betriebszustand ist das Werkzeug (8) bereits wieder nahezu geschlossen und die Werkstücke (21) sind im Bereich der Übergabestation (29) positioniert. Die Halteelemente (24) wurden von den Werkstücken (21) gelöst, so daß nunmehr die Handhabungseinrichtung (23) den Einfahrvorgang in das geschlossene bzw. das sich schließende Werkzeug (8) beginnen kann. Die Bewegung der Handhabungseinrichtung (23) erfolgt hierbei in einer Einfahrrichtung (30).

## Patentansprüche

1. Verfahren zur Formung und Handhabung von Werkstücken, bei dem ein fließfähiges und nach seiner Formung verfestigbares Material mindestens einem Werkzeug mit mindestens einer Form zur Konturvorgabe für die Werkstücke zugeleitet wird und bei dem die Werkstücke nach einer ausreichenden Verfestigung von einer Handhabungseinrichtung aus dem geöffneten Werkzeug entnommen werden, **dadurch gekennzeichnet, daß** mindestens ein Tragarm (22) der Handhabungseinrichtung (23) mit mindestens einem Halteelement (24) für das Werkstück (21) mindestens während eines Teiles eines zu durchlaufenden Positionierweges innerhalb des geschlossenen Werkzeuges (8) bewegt wird.

2. Verfahren nach Anspruch 1, **dadurch gekennzeichnet, daß** das Halteelement (24) in einem geschlossenen Zustand des Werkzeuges (8) neben der Form (20) positioniert wird.

3. Verfahren nach Anspruch 1 oder 2, **dadurch gekennzeichnet, daß** die Handhabungseinrichtung (23) nach einem Schließen des Werkzeuges (8) in das Werkzeug (8) einfährt.

4. Verfahren nach einem der Ansprüche 1 oder 2,**dadurch gekennzeichnet, daß** die Einfahrbewegung der Handhabungseinrichtung (23) in das Werkzeug (8) mindestens zeitweilig zeitlich überlagert mit der Schließbewegung des Werkzeuges (8) durchgeführt wird.

5. Verfahren nach einem der Ansprüche 1 bis 4, **dadurch gekennzeichnet, daß** das Halteelement (24) aus einer Ruhestellung in eine Arbeitsstellung zur Beaufschlagung des Werkstückes (21) verschwenkt wird.

6. Vorrichtung zur Formung und Handhabung von Werkstücken, die mindestens ein Werkzeug mit einer Form für ein fließfähiges und nach seiner Formung verfestigbares Material aufweist und die mit einer Handhabungseinrichtung für die Werkstücke versehen ist, die mindestens einen Tragarm sowie mindestens ein Halteelement zur Beaufschlagung der Werkstücke aufweist, **dadurch gekennzeichnet, daß** das Werkzeug (8) mindestens einen Positionierraum für den Tragarm (22) der Handhabungseinrichtung (23) aufweist, der bei geschlossenem Werkzeug (8) als eine Führungsbahn für den Tragarm (22) ausgebildet ist.

7. Vorrichtung nach Anspruch 6, **dadurch gekennzeichnet, daß** die Handhabungseinrichtung (23) bei geöffnetem Werkzeug (8) aus dem Werkzeug (8) herausfahrbar ist.

8. Vorrichtung nach Anspruch 6 oder 7, **dadurch gekennzeichnet, daß** die Handhabungseinrichtung (23) bei geschlossenem Werkzeug (8) in das Werkzeug (8) einfahrbar ist.

9. Vorrichtung nach einem der Ansprüche 6 bis 8, **dadurch gekennzeichnet, daß** die Handhabungseinrichtung (23) in einer Vertiefung eines Werkzeugblockes des Werkzeuges (8) positionierbar ist.

10. Vorrichtung nach einem der Ansprüche 6 bis 8, **dadurch gekennzeichnet, daß** die Handhabungseinrichtung (23) in einem Freiraum zwischen Werkzeugblöcken des Werkzeuges (8) mit aus den Werkzeugblöcken vorstehenden Formteilen ausgebildet ist.

11. Vorrichtung nach einem der Ansprüche 1 bis 10, **dadurch gekennzeichnet, daß** der Tragarm (22) relativ zum Werkzeug (8) entlang von Führungen verschieblich ist.

12. Vorrichtung nach einem der Ansprüche 6 bis 11, **dadurch gekennzeichnet, daß** mindestens ein Halteelement (24) relativ zum Tragarm (22) verschwenkbar angeordnet ist.

13. Vorrichtung nach einem der Ansprüche 6 bis 12, **dadurch gekennzeichnet, daß** je Werkstück (21) mindestens zwei Halteelemente (24) vorgesehen sind.

14. Vorrichtung nach einem der Ansprüche 6 bis 12, **dadurch gekennzeichnet, daß** je Werkstück (21) mindestens vier Halteelemente (24) vorgesehen sind.

15. Vorrichtung nach einem der Ansprüche 6 bis 14, **dadurch gekennzeichnet, daß** die Halteelemente (24) in der Beaufschlagungspositionierung eine Rechteckkontur aufspannen.

16. Vorrichtung nach einem der Ansprüche 6 bis 15, **dadurch gekennzeichnet, daß** mindestens eines der Halteelemente (24) einen Sauger (27) zur Unterdruckbeaufschlagung aufweist.

17. Verfahren nach einem der Ansprüche 6 bis 16, **dadurch gekennzeichnet, daß** mindestens eines der Halteelemente (24) als ein bei Überdruckeinwirkung wölbungsfähiges Element ausgebildet ist.

18. Vorrichtung nach einem der Ansprüche 6 bis 15, **dadurch gekennzeichnet, daß** mindestens eines der Halterungselemente (24) als ein mechanisches Klemmelement ausgebildet ist.

19. Vorrichtung nach einem der Ansprüche 6 bis 14, **dadurch gekennzeichnet, daß** mindestens eines der Halteelemente (24) als eine sich verjüngende Begrenzungskontur ausgebildet ist.

20. Vorrichtung nach einem der Ansprüche 6 bis 19, **dadurch gekennzeichnet, daß** das Werkzeug (8) im Bereich einer Spritzgußmaschine angeordnet ist.

21. Vorrichtung nach Anspruch 20, **dadurch gekennzeichnet, daß** die Spritzgußmaschine als ein Etagenwerkzeug ausgebildet ist.

22. Vorrichtung nach einem der Ansprüche 6 bis 19, **dadurch gekennzeichnet, daß** das Werkzeug (8) im Bereich einer Spritz-Presse angeordnet ist.

23. Vorrichtung nach einem der Ansprüche 6 bis 19, **dadurch gekennzeichnet, daß** das Werkzeug (8) im Bereich einer Aluminium-Spritzgußmaschine angeordnet ist.

24. Vorrichtung nach einem der Ansprüche 6 bis 19, **dadurch gekennzeichnet, daß** das Werkzeug (8) im Bereich einer Gummi-Spritzgußmaschine angeordnet ist.

25. Vorrichtung nach Anspruch 20, **dadurch gekennzeichnet, daß** die Spritzgußmaschine als ein Etagenwerkzeug mit beweglichem Mittelbalken ausgebildet ist.

26. Vorrichtung nach einem der Ansprüche 6 bis 25, **dadurch gekennzeichnet, daß** mindestens eines der Halteelemente (24) eine Lagerung zum Ausgleich einer Hubbewegung von Ausstoßern des Werkzeuges (8) aufweist.

27. Vorrichtung nach einem der Ansprüche 6 bis 26, **dadurch gekennzeichnet, daß** die Halteelemente (24) das Werkstück (21) im Bereich eines Randes des Werkstückes (21) beaufschlagen.

28. Vorrichtung nach einem der Ansprüche 6 bis 27, **dadurch gekennzeichnet, daß** mindestens eines der Halteelemente (24) von einer Hülse mit Innenelement geführt ist.

29. Vorrichtung nach einem der Ansprüche 6 bis 28, **dadurch gekennzeichnet, daß** die Handhabungseinrichtung (23) zur Übergabe der Werkstücke (21) an eine stehende Übergabestation (29) ausgebildet ist.

30. Vorrichtung nach einem der Ansprüche 6 bis 28, **dadurch gekennzeichnet, daß** die Handhabungseinrichtung (23) zur Übergabe der Werkstücke (21) an eine bewegte Übergabestation (29) ausgebildet ist.

31. Vorrichtung nach einem der Ansprüche 6 bis 30, **dadurch gekennzeichnet, daß** die Handhabungseinrichtung (23) einen Antrieb zur Durchführung einer sich zeitlich mit einer Öffnungsbewegung des Werkzeuges (8) überlagernden Positionierbewegung der Halteelemente (24) ausgerüstet ist.

32. Vorrichtung nach einem der Ansprüche 6 bis 31, **dadurch gekennzeichnet, daß** die Handhabungseinrichtung (23) einen Antrieb zur Durchführung einer sich zeitlich mit einer Schließbewegung des Werkzeuges (8) überlagernden Positionierbewegung der Halteelemente (24) ausgerüstet ist.
